# FASCICULE DE BREVET EUROPEEN

(11) **EP 1 046 806 B1**
(45) Date de publication et mention de la délivrance du brevet: **15.09.2004**
(21) Numéro de dépôt: 00401088.0
(22) Date de dépôt: 19.04.2000
(51) Int. Cl.: F02K 1/00, F02K 1/12

(54) **Tuyère d'éjection de turboréacteur à système d'orientation du type cardan**
Kardanisch gelagerte schwenkbare Schubdüse
Vectoriable gimbal nozzle

(30) Priorité: 19.04.1999 FR 9904871
(43) Date de publication de la demande: 25.10.2000
(73) Titulaire: SNECMA MOTEURS, 75015 Paris (FR)
(72) Inventeur: Feder, Didier Georges, 77176 Savigny Le Temple (FR); Lapergue, Guy Jean-Louis, 77950 Rubelles (FR)

(56) Documents cités:
- US-A- 3 003 312
- US-A- 4 836 451
- US-A- 4 993 641
- US-A- 5 370 312

## Description

L'invention concerne une tuyère d'éjection de turboréacteur axisymétrique et à orientation globale.

Elle concerne plus précisément une tuyère d'éjection de turboréacteur, axisymétrique et à orientation globale, du type comportant une commande de volets convergents portée par une structure orientable, ladite structure orientable étant montée sur l'extrémité aval d'un carter d'éjection d'axe X, de manière à pouvoir basculer autour d'un centre fixe O situé sur l'axe X et des moyens étant prévus pour faire basculer la structure orientable et pour régler la section de sortie des volets convergents.

EP 0 029 773 montre une tuyère convergente de ce type, dans laquelle la structure orientable est reliée au carter d'éjection au moyen d'éléments élastiques qui reprennent toutes les charges transversales. Les charges axiales, quant à elles, sont reprises par les vérins de commande du basculement de la structure orientable. Un deuxième groupe de vérins ancrés sur la structure orientable est nécessaire pour régler la section de sortie de la tuyère.

EP 0 060 763 propose une structure orientable ayant des portées sphériques coopérant avec des portées sphériques solidaires du carter d'éjection avec interposition d'un dispositif de roulement et de guidage. L'anti-rotation de la structure orientable est obtenue par au moins un ensemble de guidage constitué par une glissière fixée sur la partie structurale fixe, et un galet fixé sur la structure orientable. L'orientation est réalisée par un groupe de vérins ancrés sur le carter d'éjection et le réglage de la section de la tuyère est réalisé par un deuxième groupe de vérins portés par la structure orientable. Dans cette construction, les vérins assurant l'orientation de la structure orientable doivent reprendre les efforts dus au frottement et au roulement sur les sphères structurales, qui sont généralement de grandes dimensions et, par conséquent, sensibles aux dilatations et déformations thermiques et mécaniques.

Dans les deux documents mentionnés ci-dessus, les volets convergents sont articulés à l'extrémité aval de la structure orientable, et cette dernière porte les vérins de commande des volets, ce qui augmente la masse de la partie pivotante et le temps de réponse pour orienter la tuyère.

US 4 984 741 concerne une tuyère convergente divergente à orientation globale, dans laquelle les volets convergents sont montés coulissant axialement sur une structure orientable de forme sphérique et sont actionnés par des vérins portés par cette structure. La liaison entre la structure orientable et le carter d'éjection est réalisée au moyen de deux paires de broches radiales diamétralement opposées solidaires de pattes axiales prévues sur la structure orientable et le carter d'éjection qui coulissent dans des lanières ménagées dans les pattes correspondantes de l'autre pièce. Ces broches reprennent les charges transversales, mais les charges axiales sont reprises par les vérins de commande du basculement de la structure orientable.

Un premier objectif de l'invention est de proposer une liaison entre la structure orientable et le carter d'éjection qui élimine en grande partie les efforts par frottement ou roulement, et qui reprenne les charges transversales et la plus grande partie des charges axiales.

L'invention atteint ce but par le fait que la structure orientable est montée sur l'extrémité aval du carter d'éjection au moyen d'un anneau intermédiaire susceptible de pivoter autour d'un premier axe géométrique passant par le centre O par rapport au carter d'éjection et susceptible de pivoter autour d'un deuxième axe géométrique perpendiculaire au premier axe et passant par le centre O par rapport à la structure orientable.

Avantageusement, l'anneau intermédiaire est relié à la structure orientable par deux premières liaisons pivotantes diamétralement opposées et est relié au carter d'éjection par deux deuxièmes liaisons pivotantes diamétralement opposées et dont les axes de rotation sont perpendiculaires aux axes de rotation des deux premières liaisons pivotantes.

De manière à annuler les effets de déformations ou de tolérances, les premières liaisons et les deuxièmes liaisons sont rotulantes.

Les liaisons entre l'anneau intermédiaire et la structure orientable, et le carter d'injection, empêchent la rotation de la structure orientable autour de l'axe géométrique du carter d'éjection. Les forces axiales qui s'exercent sur la structure orientable sont transmises à l'anneau intermédiaire, puis au carter d'éjection sans passer par les moyens de commande du basculement de la structure orientable.

Selon une deuxième caractéristique de l'invention, les volets convergents sont articulés sur l'extrémité aval de la structure orientable, et les moyens, pour faire basculer la structure orientable et pour régler la section de sortie des volets convergents, comportent un anneau de commande unique relié aux volets convergents par des bielles et actionné par une pluralité de vérins prenant appui sur le carter d'éjection.

De préférence, la tuyère comporte en outre une couronne de volets divergents articulés à l'extrémité aval des volets convergents et reliés à la structure orientable par des bielles.

Elle comporte également de préférence une couronne de volets externes articulés à leur extrémité amont sur l'anneau de commande et reliés aux volets divergents par une liaison souple. Cette liaison souple est par exemple une liaison glissante.

D'autres avantages et caractéristiques de l'invention ressortiront à la lecture de la description suivante, faite à titre d'exemple et en référence aux dessins annexés, dans lesquels :
la figure 1 est une vue en coupe axiale d'une tuyère axisymétrique à orientation globale conforme à l'invention, cette tuyère étant montrée dans la position ouverte, non orientée ;

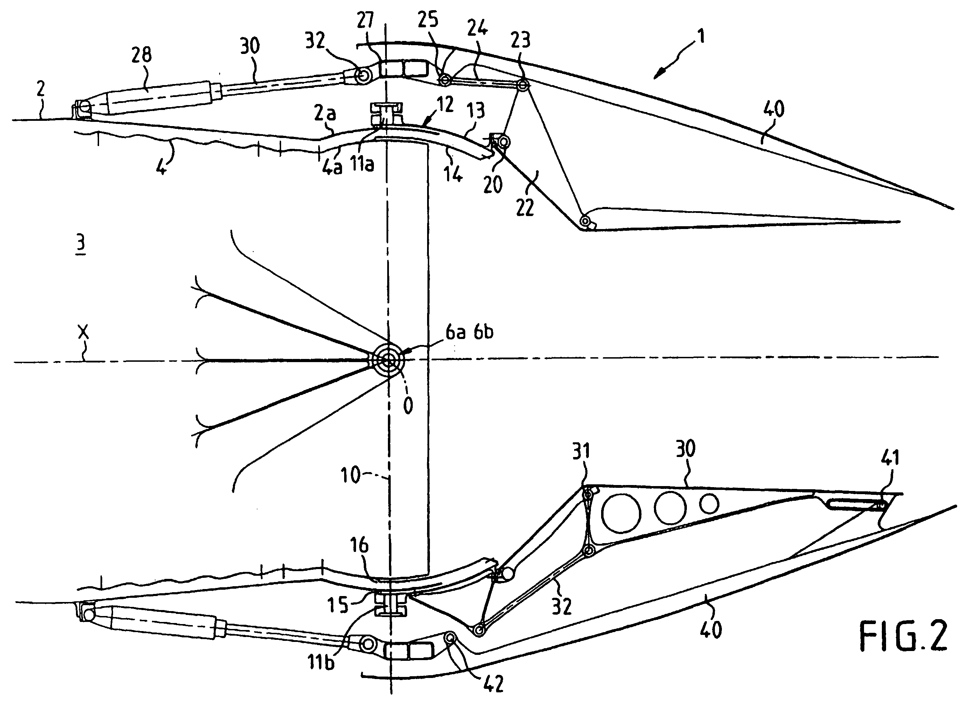

la figure 2 est semblable à la figure 1 et montre la même tuyère en position fermée, non orientée ;

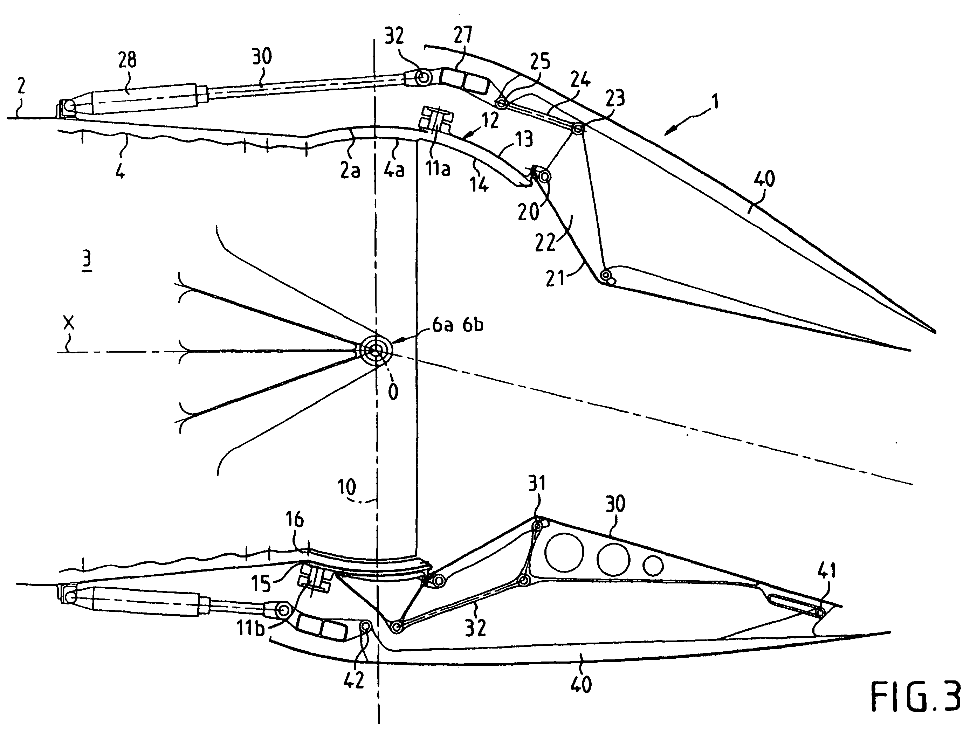

la figure 3 est une vue en coupe axiale de la tuyère de la figure 1 en position fermée et orientée ;

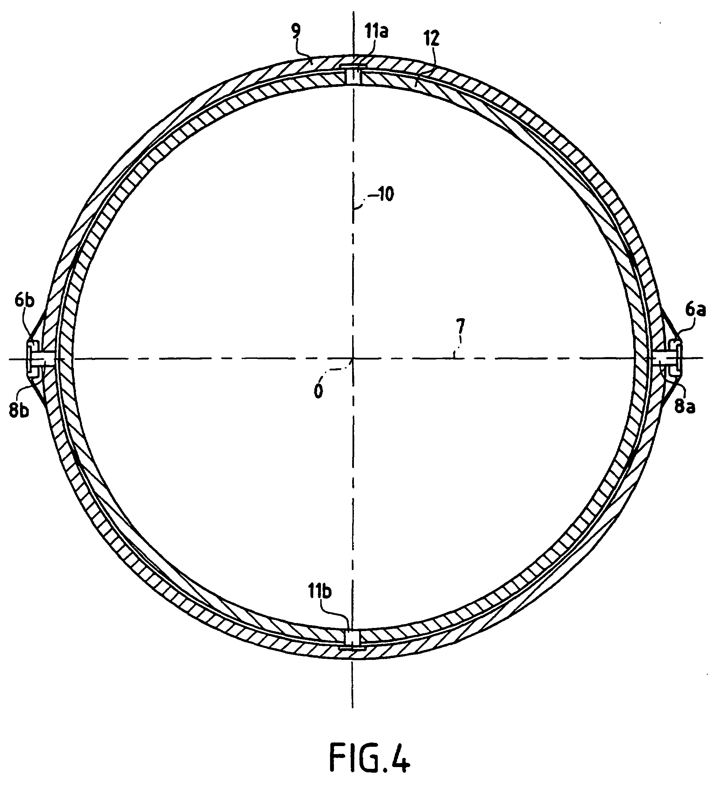

la figure 4 est une coupe selon la figure IV-IV de la figure 1 qui montre la liaison entre la structure orientable et le carter d'éjection ; et

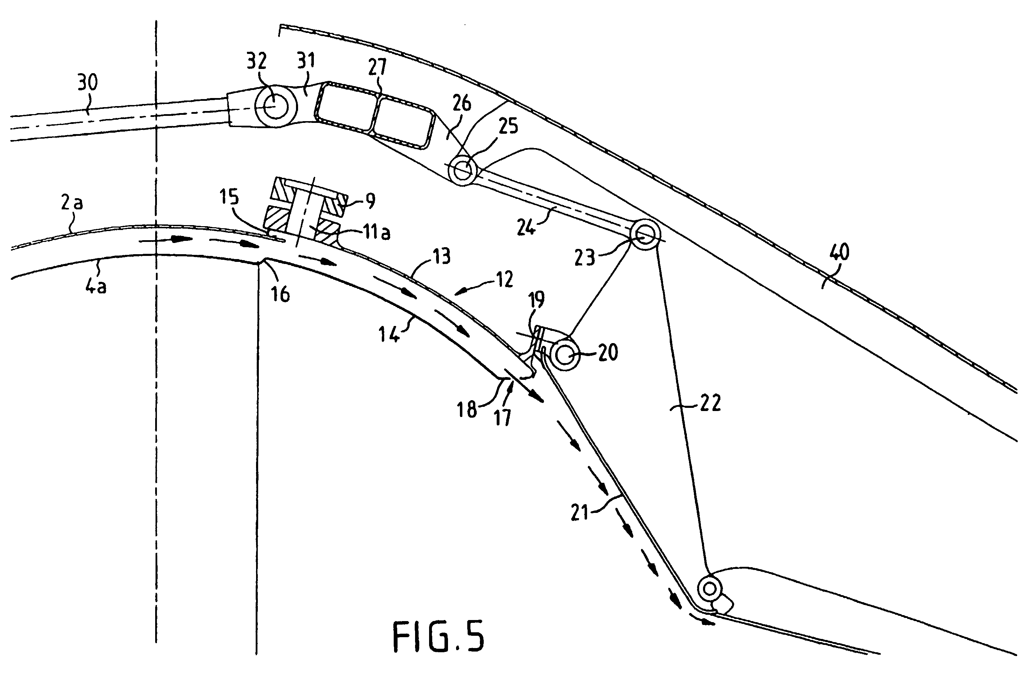

la figure 5 montre un système de refroidissement de la structure orientable et des volets convergents.

La référence 1 représente une tuyère orientable équipant l'extrémité d'un fuselage ou d'une nacelle d'avion.

Le carter d'éjection 2, d'axe X, qui délimite une chambre de post-combustion 3, est doublé intérieurement d'une chemise de protection thermique 4. Le carter d'éjection 2 et la chemise de protection 4 se terminent tous les deux en aval par des portées sphériques référencées respectivement 2a et 4a.

Le carter d'éjection 2 comporte en outre à sa partie aval deux bras de support 6a et 6b qui s'étendent vers l'aval, à l'extérieur des portées sphériques 2a, 4a, et qui sont diamétralement opposées.

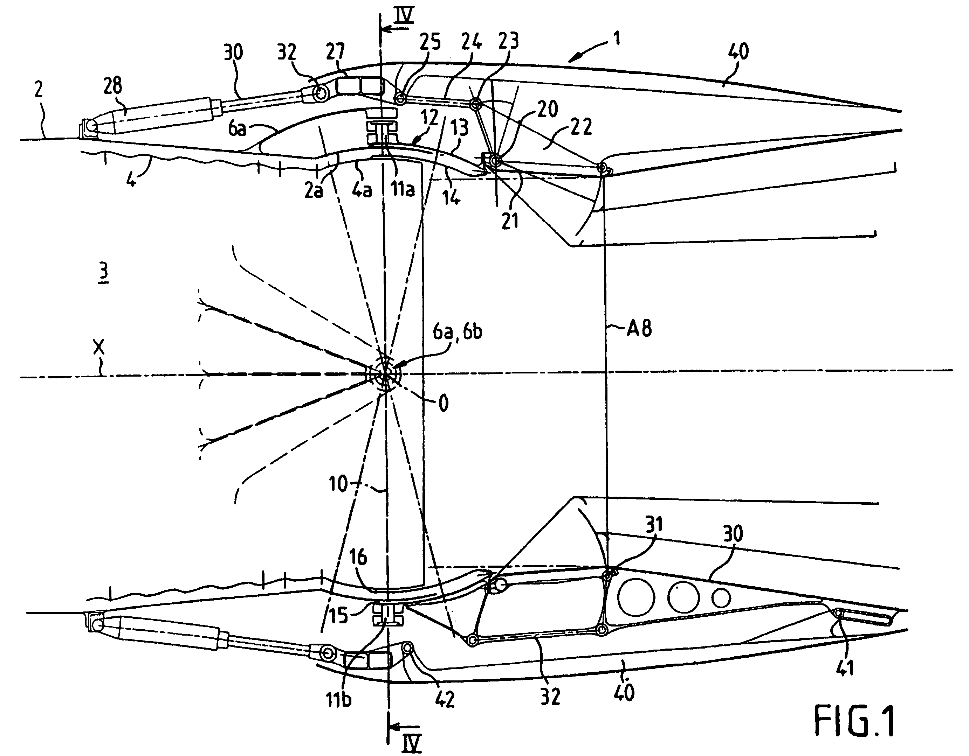

Sur la figure 1, le bras de support 6a est monté ramené dans le plan de la coupe, mais ces deux bras se trouvent en fait respectivement en dessous et au-dessus du plan de la figure 1. Les bras de support 6a et 6b pourraient également être constitués par un profil de révolution entourant les portées sphériques 2a et 4a.

Ces deux bras de support 6a et 6b supportent, de manière pivotante autour d'un axe géométrique 7 passant par le centre O des portées sphériques 2a et 4a, deux broches 8a, 8b diamétralement opposées et solidaires d'un anneau intermédiaire 9 de centre O. L'anneau intermédiaire 9 supporte de manière pivotante autour d'un axe géométrique 10 perpendiculaire à l'axe géométrique 7 et passant par le centre O, deux broches 11 a et 11 b diamétralement opposées et solidaires d'une structure orientable 12.

La structure orientable 12 se présente sous la forme de deux viroles annulaires sphériques 13, 14, qui sont reliées par leurs extrémités aval et qui sont disposées respectivement au voisinage des portées sphériques 2a et 4a, avec interposition de joints d'étanchéité 15 et 16 à leur extrémité amont.

L'espace annulaire 17 délimité par la portée sphérique externe 2a et la virole interne 14 est en communication directe avec l'espace annulaire séparant le carter d'éjection 2 de la chemise de protection thermique 4 et reçoit de l'air de refroidissement F qui s'évacue dans la veine des gaz d'éjection par des orifices 17 ménagés dans la paroi de liaison 18 des deux viroles 13 et 14.

La structure orientable 12 présente à son extrémité aval une bride 19 sur laquelle sont articulées au moyen de charnières radiales 20 les extrémités amont d'une pluralité de volets convergents 21. Ces volets convergents comportent en alternance des volets commandés et des volets suiveurs. Les volets convergents commandés 21 présentent sur leur face externe des raidisseurs 22 sur lesquels sont articulés, au point 23, les extrémités aval de bielles 24 dont les extrémités amont sont articulées, au point 25 sur des chapes 26 solidaires d'un anneau de commande 28. L'anneau de commande 27 est relié au carter d'éjection 2 par au moins trois vérins de commande 28 régulièrement répartis autour de l'axe X du carter 2. Les corps des vérins 28 sont liés au carter d'éjection 2 par des charnières radiales 29, et les tiges 30 des vérins sont reliées à des chapes 31 solidaires de l'anneau de commande 27 par des charnières radiales 32.

Un déplacement identique des tiges 30 des trois vérins 28 entraîne une translation de l'anneau de commande 27 parallèlement à l'axe X, et le réglage de la section A8 de sortie des volets convergents 21, par le déplacement des bielles 24 articulées aux points 23 sur les volets convergents commandés 21. Cette disposition assure également l'autoportage et le centrage de l'anneau de commande 27. Cet anneau de commande 27 entoure les deux bras de support 6a et 6b.

Lorsque chaque vérin 28 est piloté individuellement, l'anneau de commande 27 s'incline par rapport à l'axe X dans la direction choisie et l'ensemble des bielles 24 applique un moment de rotation à chaque volet convergent 21, à partir du point 23. Ce moment de rotation chemine par l'intermédiaire des volets convergents 21, des charnières radiales 20 vers la structure orientable 12.

La pluralité des volets convergents 21 entraîne ainsi en rotation la structure orientable 12 et l'anneau intermédiaire 9 autour de leurs axes géométriques respectifs 7 et 10. Cela permet d'orienter toute la couronne des volets convergents 21 vers la direction souhaitée et donc d'obtenir la poussée vectorielle pilotée du turboréacteur.

Une deuxième couronne de volets, dits volets divergents 30, est disposée en aval des volets convergents 21. Cette deuxième couronne de volets comporte le même nombre de volets que la couronne de volets convergents, et elle comporte une pluralité de volets divergents commandés intercalés entre des volets divergents suiveurs. Les volets divergents 30 sont articulés à leur extrémité amont sur l'extrémité aval des volets convergents 21 au moyen d'une charnière radiale 31. Ils sont en outre reliés à la structure orientable 12 par des bielles 32 disposées sensiblement parallèlement aux volets convergents 21. La longueur des bielles 32 et la position de leurs articulations sont calculées afin d'obtenir les configurations conformes aux phases de vol les plus courantes.

Il est également possible de prévoir plusieurs lois de cinématiques angulaires des volets divergents 30 en fonction de la mission de l'avion, en prévoyant un deuxième point d'accrochage de chaque bielle 32 sur le volet divergent 30 correspondant, et en remplaçant avant le vol ces bielles 32 par d'autres bielles de longueur différente, fixées au même point de liaison sur le volet 32 ou au deuxième point prévu.

La figure 1 montrée sur les dessins comporte en outre une couronne de volets externes 40 disposée dans le prolongement du profil aérodynamique de l'avion. Ces volets externes, encore appelés volets secondaires ou volets froids, sont articulés à leur extrémité amont sur l'anneau de commande 27 au moyen d'une charnière radiale 42, et sont reliés à leur extrémité aval aux extrémités aval des volets divergents 30 par une liaison souple, qui n'entraîne pas de blocage de l'ensemble. Cette liaison souple peut être réalisée au moyen de biellettes, ou d'une liaison glissante 41, ainsi que cela est montré sur les dessins.

L'homme du métier comprendra facilement que le basculement seul de l'anneau de commande entraîne une rotation de l'ensemble de la tuyère autour du centre O, et qu'un déplacement axial de l'anneau de commande entraîne le réglage de la section A8 de sortie des volets convergents et le réglage concomitant de la section A9 de sortie des volets divergents 30 et de l'angle des volets externes 40.

Dans la présente invention, la portée sphérique 2a du carter 2 n'a aucun rôle structural. Cette surface sphérique est uniquement destinée à réaliser l'étanchéité entre la structure orientable 12 et le carter 2 au moyen du joint d'étanchéité 15.

Les frottements ou roulements entre sphères, objet des brevets cités en introduction, sont remplacés par un joint universel constitué par des articulations classiques disposées perpendiculairement, ce qui supprime tout problème lié aux tolérances de fabrications, dilatations et déformations thermiques sur des composants de grandes dimensions. En outre, ces articulations reprennent les forces axiales et les forces tangentielles appliquées sur la structure orientable 12.

## Revendications

1. Tuyère d'éjection de turboréacteur, axisymétrique et à orientation globale, du type comportant une couronne de volets convergents (21) portée par une structure orientable (12), ladite structure orientable (12) étant montée sur l'extrémité aval d'un carter d'éjection (2) d'axe X de manière à pouvoir basculer autour d'un centre fixe O situé sur l'axe X, et des moyens étant prévus pour faire basculer la structure orientable (12) et pour régler la section de sortie (A8) des volets convergents, **caractérisée par le fait que** la structure orientable (12) est montée sur l'extrémité aval du carter d'éjection (2) au moyen d'un anneau intermédiaire (9) susceptible de pivoter autour d'un premier axe géométrique (7) passant par le centre O par rapport au carter d'éjection (2) et susceptible de pivoter autour d'un deuxième axe géométrique (10) perpendiculaire au premier axe (7) et passant par le centre O par rapport à la structure orientable (12).

2. Tuyère selon la revendication 1, **caractérisée par le fait que** l'anneau intermédiaire (9) est relié à la structure orientable (12) par deux premières liaisons pivotantes (11 a, 11 b) diamétralement opposées et est reliée au carter d'éjection (2) par deux deuxièmes liaisons pivotantes (8a, 8b) diamétralement opposées et dont les axes de rotation sont perpendiculaires aux axes de rotation des deux premières liaisons pivotantes (11a, 11b).

3. Tuyère selon la revendication 2, **caractérisée par le fait que** les premières liaisons et les deuxièmes liaisons sont rotulantes.

4. Tuyère selon l'une des revendications 1 à 3, **caractérisée par le fait que** les volets convergents (21) sont articulés sur l'extrémité aval de la structure orientable (12), et **par le fait que** les moyens pour faire basculer la structure orientable (12) et pour régler la section de sortie (A8) des volets convergents (21) comportent un anneau de commande (27) unique relié aux volets convergents (21) par des bielles (24) et actionné par une pluralité de vérins (28) prenant appui sur le carter d'éjection (2).

5. Tuyère selon la revendication 4, **caractérisé par le fait qu'**elle comporte en outre une couronne de volets divergents (30) articulés à l'extrémité aval des volets convergents (21) et reliés à la structure orientable (12) par des bielles (32).

6. Tuyère selon la revendication 5, **caractérisée par le fait qu'**elle comporte en outre une couronne de volets externes (40) articulés à leur extrémité amont sur l'anneau de commande (27), et reliés aux volets divergents (30) par une liaison souple (41).

7. Tuyère selon la revendication 4, **caractérisée par le fait que** la liaison souple (41) est une liaison glissante.

8. Tuyère selon l'une quelconque des revendications 1 à 5, **caractérisée par le fait que** l'anneau intermédiaire (9) est supporté par deux bras support (6a, 6b) situés à l'extérieur de l'extrémité aval du carter d'éjection (2) et solidaires de ce dernier.

9. Tuyère selon la revendication 6, **caractérisée par le fait que** l'extrémité aval du carter d'éjection (2) a une partie sphérique (2a), et la structure orientable (12) comporte une virole (13) sphérique disposée à l'extérieur de la partie sphérique (2a).

10. Tuyère selon la revendication 9, **caractérisée par le fait qu'**un joint d'étanchéité (15) est interposé entre la virole sphérique (13) et la partie sphérique (2a).

## Patentansprüche

1. Achsensymmetrische und als Ganzes schwenkbare Turbotriebwerk-Schubdüse mit einem von einer schwenkbaren Struktur (12) getragenen Kranz von konvergierenden Klappen (21), wobei die schwenkbare Struktur (12) an dem stromabwärtigen Ende eines Düsengehäuses mit einer Achse X so montiert ist, daß sie um ein auf der Achse X liegendes festes Zentrum O schwenken kann, und wobei Mittel zum Verschwenken der schwenkbaren Struktur (12) und zur Regulierung des Ausgangsquerschnitts (A8) der konvergierenden Klappen vorgesehen sind,
**dadurch gekennzeichnet,**
**daß** die schwenkbare Struktur (12) an dem stromabwärtigen Ende des Düsengehäuses (2) mit Hilfe eines Zwischenrings (9) montiert ist, der sich relativ zu dem Düsengehäuse (2) um eine durch das Zentrum O verlaufende erste geometrische Achse (7) drehen kann und der sich relativ zu der schwenkbaren Struktur (12) um eine zur ersten Achse (7) senkrechte und das Zentrum ○ verlaufende zweite geometrische Achse (10) drehen kann.

2. Düse nach Anspruch 1, **dadurch gekennzeichnet, daß** der Zwischenring (9) mit der schwenkbaren Struktur (12) durch zwei diametral entgegengesetzte erste Drehverbindungen (11a, 11 b) verbunden ist und mit dem Düsengehäuse (2) durch zwei diametral entgegengesetzte zweite Drehverbindungen (8a, 8b) verbunden ist, deren Rotationsachsen senkrecht zu den Rotationsachsen der beiden ersten Drehverbindungen (11a, 11b) verlaufen.

3. Düse nach Anspruch 2, **dadurch gekennzeichnet, daß** die ersten Verbindungen und die zweiten Verbindungen gelenkig sind.

4. Düse nach einem der Ansprüche 1 bis 3, **dadurch gekennzeichnet, daß** die konvergierenden Klappen (21) an dem stromabwärtigen Ende der schwenkbaren Struktur (12) angelenkt sind und daß die Mittel zum Verschwenken der schwenkbaren Struktur (12) und zur Regulierung des Ausgangsquerschnitts (A8) der konvergierenden Klappen (21) einen einzigen Steuerring (27) umfassen, der durch Pleuel (24) mit den konvergierenden Klappen (21) verbunden ist und durch mehrere Hubzylinder (28) betätigt wird, die sich an dem Düsengehäuse (2) abstützen.

5. Düse nach Anspruch 5, **dadurch gekennzeichnet, daß** sie außerdem einen Kranz von divergierenden Klappen (30) aufweist, die an dem stromabwärtigen Ende der konvergierenden Klappen (21) angelenkt und durch Pleuel (32) mit der schwenkbaren Struktur (12) verbunden sind.

6. Düse nach Anspruch 5, **dadurch gekennzeichnet, daß** sie außerdem einen Kranz von äußeren Klappen (40) aufweist, die mit ihrem stromaufwärtigen Ende an dem Steuerring (27) angelenkt und durch eine nachgiebige Verbindung (41) mit den divergierenden Klappen (30) verbunden sind.

7. Düse nach Anspruch 4, **dadurch gekennzeichnet, daß** die nachgiebige Verbindung (41) eine Gleitverbindung ist.

8. Düse nach einem der Ansprüche 1 bis 5, **dadurch gekennzeichnet, daß** der Zwischenring (9) von zwei Stützarmen (6a, ab) getragen ist, die außerhalb des stromabwärtigen Endes des Düsengehäuses (2) liegen und mit letzterem fest verbunden sind.

9. Düse nach Anspruch 6, **dadurch gekennzeichnet, daß** das stromabwärtige Ende des Düsengehäuses (2) einen sphärischen Teil (2a) aufweist und daß die schwenkbare Struktur (12) einen sphärischen Ring (13) aufweist, der außerhalb des sphärischen Teils (2a) angeordnet ist.

10. Düse nach Anspruch 9, **dadurch gekennzeichnet, daß** zwischen dem sphärischen Ring (13) und dem sphärischen Teil (2a) eine Dichtung (15) angeordnet ist.

## Claims

1. Axisymmetric universally swivelling turbojet ejector nozzle of the type comprising a ring of convergent flaps (21) mounted on a swivel structure (12), the said swivel structure (12) being mounted on the rear end of an ejector casing (2) of axis X in such a way that it can pivot about a fixed centre O situated on the axis X, and means being provided for pivoting the swivel structure (12) and for adjusting the cross-sectional area of the outlet (A8) of the convergent flaps, which nozzle is **characterized in that** the swivel structure (12) is mounted on the rear end of the ejector casing (2) by means of an intermediate annulus (9) capable of pivoting about a first geometrical axis (7) passing through the centre O with respect to the ejector casing (2) and capable of pivoting about a second geometrical axis (10) perpendicular to the first axis (7) and passing through the centre (O) with respect to the swivel structure (12).

2. Nozzle according to Claim 1, **characterized in that** the intermediate annulus (9) is connected to the swivel structure (12) by two first diametrically opposed pivoting joints (11a, 11b) and is connected to the ejector casing (2) by two second diametrically opposed pivoting joints (8a, 8b) whose axes of rotation are perpendicular to the axes of rotation of the two first pivoting joints (11a, 11b).

3. Nozzle according to Claim 2, **characterized in that** the first joints and the second joints are ball joints.

4. Nozzle according to one of Claims 1 to 3, **characterized in that** the convergent flaps (21) are hinged at the rear end of the swivel structure (12), and **in that** the means for pivoting the swivel structure (12) and for adjusting the cross-sectional area of the outlet (A8) of the convergent nozzles (21) comprise a single control annulus (27) which is connected to the convergent flaps (21) by links (24) and actuated by a plurality of thrust cylinders (28) reacting on the ejector casing (2).

5. Nozzle according to Claim 4, **characterized in that** it also comprises a ring of divergent flaps (30) hinged at the rear end of the convergent flaps (21) and connected to the swivel structure (12) by links (32).

6. Nozzle according to Claim 5, **characterized in that** it also comprises a ring of outer flaps (40) hinged at their front end to the control annulus (27) and connected to the divergent flaps (30) by a flexible joint (41).

7. Nozzle according to Claim 4, **characterized in that** the flexible joint (41) is a sliding joint.

8. Nozzle according to any one of Claims 1 to 5, **characterized in that** the intermediate annulus (9) is supported by two support arms (6a, 6b) situated on the outside of the rear end of the ejector casing (2) and attached to the latter.

9. Nozzle according to Claim 6, **characterized in that** the rear end of the ejector casing (2) has a spherical portion (2a), and the swivel structure (12) comprises a spherical shroud (13) situated on the outside of the spherical portion (2a).

10. Nozzle according to Claim 9, **characterized in that** a seal (15) is interposed between the spherical shroud (13) and the spherical portion (2a).
